## Europäisches Patentamt
## European Patent Office
## Office européen des brevets

(11) Veröffentlichungsnummer: **0 217 151 B1**

(12) **EUROPÄISCHE PATENTSCHRIFT**

(45) Veröffentlichungstag der Patentschrift:
03.01.90

(51) Int. Cl.⁴: **F16G 11/00**

(21) Anmeldenummer: **86112051.7**

(22) Anmeldetag: **01.09.86**

(54) **Klemm-Spannvorrichtung für Seile, Bänder, Gurte o.dgl.**

(30) Priorität: **01.10.85 DE 8527925 U**

(43) Veröffentlichungstag der Anmeldung:
**08.04.87 Patentblatt 87/15**

(45) Bekanntmachung des Hinweises auf die Patenterteilung:
**03.01.90 Patentblatt 90/1**

(84) Benannte Vertragsstaaten:
**AT CH DE FR GB LI NL**

(56) Entgegenhaltungen:
**DE-U- 8 527 925
FR-A- 351 655
FR-A- 801 769
FR-A- 957 085
GB-A- 457 649
US-A- 1 499 477
US-A- 1 518 601
US-A- 1 764 380
US-A- 3 923 406**

(73) Patentinhaber: **Rockenfeller KG Befestigungselemente,
Ferndorfstrasse 80, D-5912 Hilchenbach 1(DE)**

(72) Erfinder: **Rockenfeller, Gottfried, Ing. grad., An der
Wilhelmsburg 11, D-5912 Hilchenbach(DE)**
Erfinder: **Rockenfeller, Wolfgang, Dipl.-Ökonom, Am
Rauhen Berg 6, D-5912 Hilchenbach-Helberhausen(DE)**
Erfinder: **Kunze, Friedhelm, Dorfstrasse 9,
D-5912 Hilchenbach-Vormwald(DE)**

(74) Vertreter: **Müller, Gerd et al, Patentanwälte
HEMMERICH-MÜLLER-GROSSE-POLLMEIER-MEY
Hammerstrasse 2, D-5900 Siegen 1(DE)**

ACTORUM AG

## Beschreibung

Gegenstand der Erfindung ist eine Klemm-Spannvorrichtung für Seile, Bänder, Gurte oder dergleichen, die einen länglichen Grundkörper aus mindestens annähernd starrem Material und wenigstens zwei mit Abstand voneinander quer verschiebbar geführte Klemmstücke aufweist, die durch Spannglieder bewegbar sind und je eine Aufnahme zum Durchziehen des Seiles enthalten, wobei das durch die Aufnahme geführte Seil mittels der Spannglieder gegen ein ortsfestes Widerlager am Grundkörper anpreßbar ist.

Klemm-Spannvorrichtungen dieser Art sind bspw. bekannt durch FR-A 801 769, FR-A 975 085 und US-A 1 499 477.

Bei allen diesen bekannten Klemm-Spannvorrichtungen wird dabei das Seil oder dergleichen durch einen Längskanal desselben hindurchgeführt und mit Hilfe der Spannglieder gegen die Wandungen des Längskanals angepreßt.

Nachteilig ist jedoch bei diesen bekannten Klemm-Spannvorrichtungen, daß sich die Seilenden nur schwer durch den Längskanal des Grundkörpers und ordnungsgemäß an den in diesen hineinragenden Spanngliedern vorbeiführen lassen, weil das Vorschieben des Seilendes innerhalb des Längskanals nicht beobachtet werden kann. Dadurch wird dann aber die Handhabung der Klemm-Spannvorrichtung umständlich und es ergibt sich hieraus zwangsläufig eine zeitraubende und unsichere Bedienungsweise, und zwar insbesondere dann, wenn die Seilenden sich nach mehr oder weniger kurzer Gebrauchszeit in unerwünschter Weise aufspleißen.

Ziel der Erfindung ist es, eine gattungsgemäße Klemm-Spannvorrichtung für Seile, Bänder, Gurte oder dergleichen zu schaffen, bei der die Lage der Seile, Bänder, Gurte oder dergleichen relativ zu den am Grundkörper befindlichen Klemmstücken jederzeit beobachtet und auf ordnungsgemäßes Zusammenwirken mit dem Grundkörper und den Klemmstücken beobachtet werden kann.

Gelöst wird diese Aufgabe erfindungsgemäß nach Anspruch 1 dadurch, daß das Seil, Band oder Gurt an einer äußeren Längsseitenfläche des Grundkörpers verläuft und daß die Klemmstücke von Haken-, Augen- oder Ösenschrauben gebildet sind, deren Haken, Auge bzw. Öse jeweils in einem Querschlitz des Grundkörpers versenkbar geführt ist, während ihr Gewindeschaft durch ein Loch im Grundkörper aus der dem Querschlitz gegenüber liegenden Seite desselben herausragt und mit einer dort als Spannglied abgestützten Mutter, vorzugsweise einer Flügelmutter, in Eingriff steht.

Bewährt hat sich in Weiterbildung des Erfindungsgedankens, wenn gemäß Anspruch 2 der Grundkörper ein wenigstens an seinen Enden mit Rundungsflächen versehener, massiver Klotz ist, in den die Führungen und die Widerlager für die Klemmstücke sowie Stützanlagen bzw. -auflagen für die an den Klemmstücken angreifenden Spannglieder angeformt sind.

Nach Anspruch 3 ist die Möglichkeit ins Auge gefaßt, daß der den Grundkörper bildende Klotz auf seiner ganzen Länge gleichen Querschnitt aufweist. Es hat sich jedoch nach Anspruch 4 als besonders vorteilhaft erwiesen, wenn der den Grundkörper bildende Klotz zwei durch einen taillenartig eingeschnürten Mittelteil miteinander einstückig verbundene, verdichtete Endstücke aufweist, weil hierdurch eine Fertigung des Grundkörpers unter Materialeinsparung ermöglicht wird.

Damit eine sichere Lagenfixierung der Seile, Bänder, Gurte oder dergleichen in der Klemm-Spannvorrichtung erreicht wird, ohne daß schädliche Kerbwirkungen an diesen auftreten, sind nach Anspruch 5 jedem Querschlitz im Grundkörper seitliche Einlaufmulden für das Seil, das Band oder den Gurt zugeordnet, die am Schlitzrand ihre größte Profiltiefe haben und allmählich in die Seitenflächen des Grundkörpers auslaufen.

Nach Anspruch 6 liegt es im Rahmen der Erfindung, daß die Haken, Augen oder Ösen sämtlicher Klemmstücke der gleichen Seitenfläche des Grundkörpers zugeordnet sind und folglich sämtliche zugehörigen Spannglieder sich an der anderen Seitenfläche des Grundkörpers befinden.

Nach Anspruch 7 wird es jedoch als besonders vorteilhaft in Betracht gezogen, daß die Haken, Augen oder Ösen der einzelnen Klemmstücke verschiedenen Seitenflächen des Grundkörpers zugeordnet sind. Die durch die Seile, Bänder, Gurte oder dergleichen in den Grundkörper abgesetzten Spannkräfte wirken hier als reine Zugkräfte in Diagonalrichtung des Klotzes, während im Falle der Ausgestaltung nach Anspruch 6 im Klotz Zug- und Biegekräfte aufgenommen werden müssen.

Eine weitere Bauform der erfindungsgemäßen Klemm-Spannvorrichtung zeichnet sich nach Anspruch 8 dadurch aus, daß die Klemmstücke aus einem Bügel bestehen, bei dem an jedem Bügelschenkel ein Spannglied, z.B. eine Mutter oder ein Exzenter, angreift.

Ein als Spannglied dienender Exzenter kann nach dem Weiterbildungsmerkmal des Anspruchs 9 auf einer Achse drehbar gelagert sein, die ihre Lager in den Enden beider Bügelschenkel hat.

Eine erfindungsgemäße Klemm-Spannvorrichtung zeichnet sich nach Anspruch 10 weiterhin dadurch aus, daß der Grundkörper bzw. Klotz als Formteil aus Kunststoff gestaltet ist. Hierbei können nach Anspruch 11 die Klemmstücke als Formteile aus Metalldraht, insbesondere Stahldraht, ausgeführt sein, während die Spannglieder aus Metall und/oder Kunststoff gefertigt werden können.

Weitere Merkmale und Vorteile des Gegenstandes der Erfindung werden nachfolgend an in der Zeichnung dargestellten Ausführungsbeispielen erläutert. Es zeigen dabei

Figur 1 in räumlicher Ansichtsdarstellung eine Klemm-Spannvorrichtung für Seile,

Figur 2 teilweise im Längsschnitt und teilweise in Seitenansicht die Klemm-Spannvorrichtung nach Fig. 1,

Figur 3 einen Schnitt entlang der Linie III-III in Fig. 2 durch die Klemm-Spannvorrichtung,

Figur 4 wiederum in räumlicher Ansichtsdarstellung eine gegenüber Fig. 1 etwas abgewandelte Ausführung der Klemm-Spannvorrichtung,

Figur 5 eine wiederum abgewandelte Bauart für die Klemm-Spannvorrichtung in räumlicher Darstellung und

Figur 6 einen der Fig. 3 entsprechenden Schnitt durch eine baulich abgewandelte Klemm-Spannvorrichtung.

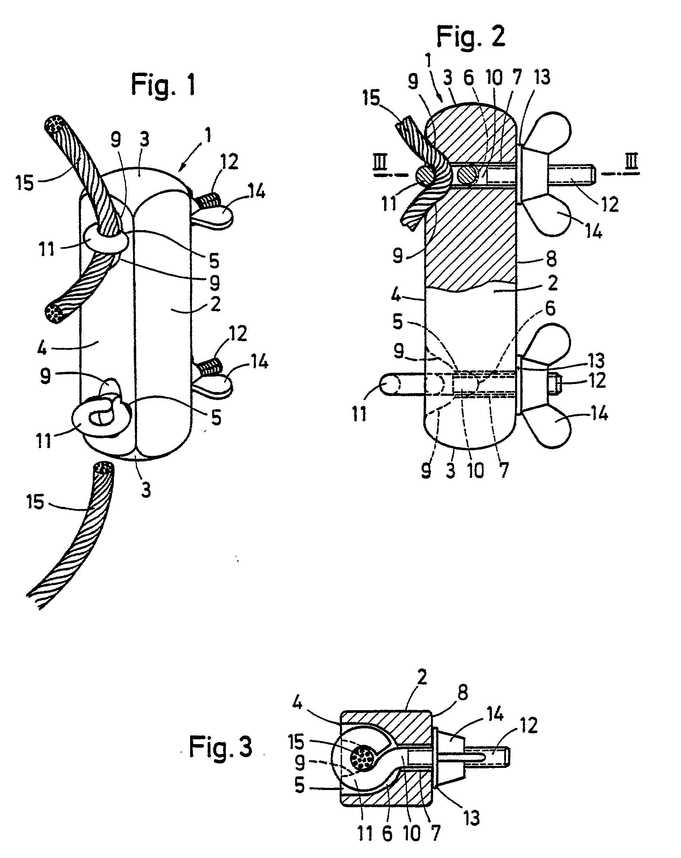

Die Klemm-Spannvorrichtung 1 nach der Zeichnung weist einen länglichen Grundkörper 2 aus mindestens annähernd starrem Material, insbesondere Kunststoff auf. Dabei ist der Grundkörper 2 als wenigstens an seinen beiden Enden mit Rundungsflächen 3 versehener, massiver Klotz gestaltet. In diesen Grundkörper 2 sind beim Ausführungsbeispiel nach den Fig. 1 bis 3 von der gleichen Längsseitenfläche 4 her Querschlitze 5 eingeformt, die einen etwa halbrunden Bodenabschnitt 6 haben, von dem aus ein Loch 7 bis durch die gegenüberliegende Längsseitenfläche 8 führt.

Jedem Querschlitz 6 sind in der Längsseitenfläche 4 seitliche Einlaufmulden 9 zugeordnet, die zum Schlitzrand hin ihre größte Profiltiefe haben und von diesen Weg allmählich in die Längsseitenfläche 4 auslaufen.

In jedem Grundkörper 2 bzw. Klotz sind zwei Querschlitze 5 mit Durchgangsloch 7 im Abstand voneinander vorgesehen. In jeden der Querschlitze 5 wird dabei eine Haken-, Augen- oder Ösenschraube 10 so eingesetzt, daß deren Haken, Auge oder Öse 11 drehfest aber verschiebbar von diesem Querschlitz 5 aufgenommen ist, während ihr Schaft 12 durch das Durchgangsloch 7 führt und über die Längsseitenfläche 8 des Grundkörpers 2 hinausragt.

Auf das freie Ende des Schaftes 12 jeder Haken-, Augen- oder Ösenschraube 10 ist unter Zwischenschaltung einer Unterlegscheibe 13 eine Mutter, und zwar insbesondere eine Flügelmutter 14, als Spannglied aufgedreht, wobei die Längsseitenfläche 8 des Grundkörpers 2 eine Stützanlage bzw. -auflage für diese Flügelmutter 14 bildet.

Der Haken, das Auge oder die Öse 11 einer jeden Haken-, Augen- oder Ösenschraube 10 bildet eine Aufnahme zum Durchziehen eines Seiles 15 oder auch eines Seilabschnittes 15. Damit das Durchziehen des Seiles 15 bzw. Seilabschnitts durch die Aufnahme des Hakens, des Auges oder der Öse 11 möglich ist, wird dieses durch entsprechendes Zurückdrehen der Flügelmutter 14 soweit aus der Längsseitenfläche 4 des Grundkörpers 2 herausgeschoben, wie das im unteren Teil der Fig. 1 und 2 erkennbar ist. Sodann läßt sich durch Anziehen der Flügelmutter 14 auf dem Gewindeschaft 12 der Haken, das Auge oder die Öse 11 in den Querschlitz 5 des Grundkörpers 2 hineinziehen, wobei das Seil 15 oder der entsprechende Seilabschnitt in diesem Querschlitz 5 und den seitlich daran anschließenden Einlaufmulden 9 unverschiebbar festgeklemmt wird (siehe Fig. 2 und 3).

Es liegt auf der Hand, daß nach dem Lockern der Haken-, Augen- oder Ösenschraube 10 das betreffende Seil 15 bzw. der Seilabschnitt durch Ausüben einer Zugkraft gespannt werden kann und sich dann in der gespannten Stellung durch manuelles Anziehen der Flügelmutter 14 am Grundkörper 2 sicher festlegen läßt.

Bei dem in den Fig. 1 bis 3 der Zeichnung dargestellten Ausführungsbeispiel einer Klemm-Spannvorrichtung sind die als Spannglieder wirksamen Haken-, Augen- oder Ösenschrauben 10 so in den Grundkörper 2 eingesetzt, daß ihre Haken, Augen oder Ösen 11 sich im Bereich ein und derselben Längsseitenfläche 4 befinden.

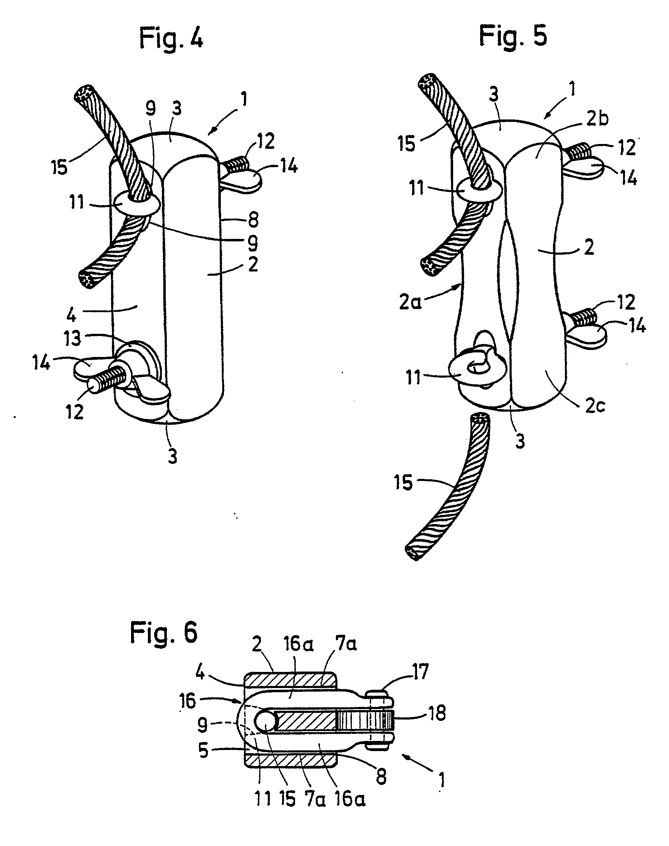

In Fig. 4 der Zeichnung ist hingegen eine Klemm-Spannvorrichtung 1 gezeigt, bei welcher die Haken, Augen oder Ösen 11 der beiden Haken-, Augen- oder Ösenschrauben 10 mit ihren Haken, Augen oder Ösen 11 an den voneinander weg gerichteten Längsseitenflächen 4 und 8 des Grundkörpers liegen und/oder wirksam gemacht werden können. Ansonsten stimmt jedoch die Ausgestaltung der Klemm-Spannvorrichtung 1 nach Fig. 4 mit derjenigen nach den Fig. 1 bis 3 völlig überein.

Den Fig. 1 bis 4 ist zu entnehmen, daß dort der den Grundkörper 2 bildende Klotz auf seiner ganzen Länge gleichen, nämlich etwa quadratischen Querschnitt hat, welcher nur durch die Querschlitze 5 und die Durchgangslöcher 7 für die Haken-, Augen- oder Ösenschrauben 10 unterbrochen wird. In Fig. 5 ist hingegen eine Bauform für die Klemm-Spannvorrichtung 1 dargestellt, bei welcher der den Grundkörper 2 bildende Klotz zwei durch ein taillenartig eingeschnürtes Mittelstück 2a einstükkig miteinander verbundene, verdickte Endstücke 2b und 2c aufweist, in deren Bereich sich die als Klemmstücke wirkenden Haken-, Augen- oder Ösenschrauben 10 befinden.

Die in Fig. 5 gezeigte Gestalt des Grundkörpers 2 eignet sich in besonders vorteilhafter Weise zur Herstellung als Spritzformteil aus Kunststoff, weil dort im Bereich des taillenartigen Mittelstücks 2a unnötige Materialansammlungen vermieden werden, ohne daß die Haltbarkeit gegen die auftretenden Kraftwirkungen beeinträchtigt ist.

In Fig. 6 ist noch gezeigt, daß als Klemmstücke für die Seile 15 oder dergleichen im Grundkörper 2 der Klemm-Spannvorrichtung 1 nicht unbedingt Haken-, Augen- oder Ösenschrauben 10 benutzt werden müssen, die mit Muttern, insbesondere Flügelmuttern 14 als Spanngliedern zusammenwirken. Nach Fig. 6 ist nämlich in jeden Querschlitz 5 des Grundkörpers 2 als Klemmstück ein U-förmiger Bügel 16 eingesetzt, dessen beide Schenkel 16a jeweils durch ein Durchgangsloch 7a geführt werden, damit sie über die gegenüberliegende Längsseitenfläche 8 hinausragen können. Dort sind die beiden U-Schenkel 16a durch eine Lagerachse 17 miteinander verbunden, auf welcher als Spannglied 18 ein Exzenter begrenzt verdrehbar ist, dessen Umfangsfläche sein Widerlager an der Längsseitenfläche 8 des Grundkörpers 2 findet. Der Exzenter 18 ist vorteilhaft mit einer Handhabe (nicht gezeigt) versehen, mit deren Hilfe er sich zwischen seiner Lösestellung und seiner Spannstellung verlagern läßt. Die Wirkungsweise der Klemm-Spannvorrichtung 1 nach Fig. 6 ist im übrigen die gleiche wie bei den Ausführungsformen nach den Fig. 1 bis 5.

Abschließend sei noch erwähnt, daß Klemm-Spannvorrichtungen 1 der vorstehend beschriebenen Art sich nicht nur zum Richten von Masten, Pfählen oder auch umgepflanzten Bäumen einsetzen lassen, sondern auch zum Spannen von Wäscheleinen, Schiffstauwerk oder dergleichen im Bedarfsfalle benutzt werden können.

**Patentansprüche**

1. Klemm-Spannvorrichtung (1) für Seile (15), Bänder, Gurte oder dergleichen mit einem länglichen Grundkörper (2) aus mindestens annähernd starrem Material und wenigstens zwei mit Abstand voneinander an diesem quer verschiebbar geführten (5, 7) Klemmstücken (10), die durch Spannglieder (14, 18) bewegbar sind und je eine Aufnahme zum Durchziehen des Seiles (15), Bandes, Gurtes oder dergleichen enthalten, wobei das durch die Aufnahme (11) geführte Seil (15), Band, Gurt oder dergleichen mittels der Spannglieder (14, 18) gegen ein ortsfestes Widerlager (9) am Grundkörper anpreßbar ist, dadurch gekennzeichnet, daß das Seil (15), Band, Gurt oder dergleichen an einer äußeren Längsseitenfläche (4) des Grundkörpers (2) verläuft und daß die Klemmstücke von Haken-, Augenoder Ösenschrauben (10) gebildet sind, deren Haken, Auge bzw. Öse (11) jeweils in einem Querschlitz (5) des Grundkörpers (2) versenkbar geführt ist, während ihr Gewindeschaft (12) durch ein Loch (7) im Grundkörper (2) aus der dem Querschlitz (5) gegenüberliegenden Längsseitenfläche (8) desselben herausragt und mit einer dort als Spannglied abgestützten Mutter, vorzugsweise einer Flügelmutter (14), in Eingriff steht.

2. Klemm-Spannvorrichtung nach Anspruch 1, dadurch gekennzeichnet, daß der Grundkörper (2) ein wenigstens an seinen Enden mit Rundungsflächen (3) versehener, massiver Klotz ist, in den die Führungen (5, 7) und die Widerlager (9) für die Klemmstücke (10) sowie die Stützanlagen bzw. Auflagen (8) für die an den Klemmstücken (10) angreifenden Spannglieder (14) angeformt sind.

3. Klemm-Spannvorrichtung nach einem der Ansprüche 1 und 2, dadurch gekennzeichnet, daß der den Grundkörper (2) bildende Klotz auf seiner ganzen Länge gleichen Querschnitt aufweist (Fig. 1 bis 4).

4. Klemm-Spannvorrichtung nach einem der Ansprüche 1 bis 3, dadurch gekennzeichnet, daß der den Grundkörper (2) bildende Klotz (2) durch ein taillenartig eingeschnürtes Mittelstück (2a) einstückig miteinander verbundene, verdichte Endstücke (2b, 2c) aufweist (Fig. 5).

5. Klemm-Spannvorrichtung nach einem der Ansprüche 1 bis 4, dadurch gekennzeichnet, daß jedem Querschlitz (5) im Grundkörper (2) seitliche Einlaufmulden (9) für das Seil, das Band oder den Gurt (15) zugeordnet sind, die am Schlitzrand ihre größte Profiltiefe haben und allmählich in den Längsseitenflächen (4 bzw. 8) des Grundkörpers (2) auslaufen.

6. Klemm-Spannvorrichtung nach einem der Ansprüche 1 bis 5, dadurch gekennzeichnet, daß die Haken, Augen oder Ösen (11) sämtlicher Klemmstücke (10) der gleichen Längsseitenfläche (4) des Grundkörpers (2) zugeordnet sind (Fig. 1 bis 3 und 5).

7. Klemm-Spannvorrichtung nach einem der Ansprüche 1 bis 5, dadurch gekennzeichnet, daß die Haken, Auge oder Ösen (11) der einzelnen Klemmstücke (10) verschiedenen Längsseitenflächen (4 und 8) des Grundkörpers (2) zugeordnet sind (Fig. 4).

8. Klemm-Spannvorrichtung nach einem der Ansprüche 1 bis 7, dadurch gekennzeichnet, daß die Klemmstücke aus einem Bügel (16) bestehen, bei dem an jedem Bügelschenkel (16a) ein Spannglied, z.B. eine Mutter oder ein Exzenter (18) angreift (Fig. 6).

9. Klemm-Spannvorrichtung nach Anspruch 8, dadurch gekennzeichnet, daß ein als Spannglied dienender Exzenter (18) auf einer Achse (17) drehbar gelagert ist, die ihre Lager in den Enden beider Bügelschenkel (16a) hat (Fig. 6).

10. Klemm-Spannvorrichtung nach einem der Ansprüche 1 bis 9, dadurch gekennzeichnet, daß der Grundkörper (2) bzw. Klotz als Formteil aus Kunststoff gestaltet ist.

11. Klemm-Spannvorrichtung nach einem der Ansprüche 1 bis 10, dadurch gekennzeichnet, daß die Klemmstücke (10 bzw. 16) als Formteile aus Metalldraht, insbesondere Stahldraht, ausgeführt sind, während die Spannglieder (14 bzw. 18) aus Metall und/oder Kunststoff gefertigt sind.

**Revendications**

1. Dispositif tendeur et de serrage (1) pour câbles (15), bandes, sangles ou analogues, comportant un élément de base (2) en un matériau au moins approximativement rigide et au moins deux pièces de serrages (10) logées à distance l'une de l'autre et guidées (5, 7) dans un déplacement transversal dans celuici, qui sont déplaçables par des organes tendeurs (14, 18) et qui présentent chacune un logement pour le passage du câble (15), de la bande, de la sangle ou autre, le câble (15), la bande, sangle ou autre menée à travers ledit logement (11) étant comprimable contre une butée fixe (9) solidaire de l'élément de base, caractérisé en ce que le câble (15), la bande, sangle ou analogue, s'étend le long d'une face latérale longitudinale extérieure (4) de l'élément de base (2) et en ce que les pièces de serrage sont constituées par des vis à crochet ou des vis à œillet (10) dont le crochet ou l'œillet (11) est chaque fois guidé de manière à être escamotable dans une fente transversale (5) pratiquée dans l'élément de base (2), tandis que la tige filetée (12) fait saillie, à travers un perçage (7) pratiqué dans l'élément de base (2), sur la face latérale longitudinale (8) de celui-ci opposée à la fente transversale (5) et est en prise avec un écrou, de préférence écrou à oreilles (14) qui prend appui sur ledit élément de base et qui sert d'organe tendeur.

2. Dispositif tendeur et de serrage selon la revendication 1 caractérisé en ce que l'élément de base (2) consiste en un bloc plein muni d'arrondis (3) au moins à ces extrémités et qui présente les guidages (5, 7) et les butées (9) pour les pièces de serrage (10) ainsi que les appuis ou supports (8) pour les organes tendeurs (14) en interaction avec les pièces de serrage (10).

3. Dispositif tendeur et de serrage selon l'une quelconque des revendications 1 et 2 caractérisé en ce que le bloc constituant l'élément de base (2) présente la même section sur toute sa longueur (Figures 1 à 4).

4. Dispositif tendeur et de serrage selon l'une quelconque des revendications 1 à 3 caractérisé en ce que le bloc (2) constituant l'élément de base (2) comporte des extrémités (2b, 2c) plus importantes reliées d'une seule pièce par une partie médiane ceintrée (2a) (Figure 5).

5. Dispositif tendeur et de serrage selon l'une quelconque des revendications 1 à 4 caractérisé en ce que des gorges d'entrée latérale (9) du câble, de la bande, ou de la sangle pratiquées dans l'élément de base (2) sont associées à chaque fente transversale (5), lesdites gorges présentant, au bord de la fente, leur plus grande profondeur qui se réduit petit à petit dans les faces latérales longitudinales (4 ou 8) de l'élément de base (2).

6. Dispositif tendeur et de serrage selon l'une quelconque des revendications 1 à 5 caractérisé en ce que les crochets ou œillets (11) de toutes les pièces de serrage (10) sont associés à la même face latérale longitudinale (4) de l'élément de base (2), (Figures 1 à 3 et 5).

7. Dispositif tendeur et de serrage selon l'une quelconque des revendications 1 à 5 caractérisé en ce que les crochets ou œillets (11) des diverses pièces de serrage (10) sont associés à des faces latérales longitudinales (4 et 8) différentes de l'élément de base (2) (Figure 4).

8. Dispositif tendeur et de serrage selon l'une quelconque des revendications 1 à 7 caractérisé en ce que les pièces de serrage consistent en un étrier (16) dont chaque bras (16a) est associé à un organe de serrage, par exemple un écrou ou un excentrique (18) (Figure 6).

9. Dispositif tendeur et de serrage selon la revendication 8 caractérisé en ce qu'un excentrique (18) servant d'organe tendeur est logé de manière à pouvoir tourner sur un axe (17) qui est logé dans les extrémités des deux bras d'étrier (16a) (Figure 6).

10. Dispositif tendeur et de serrage selon l'une quelconque des revendications 1 à 9 caractérisé en ce que l'élément de base (2) ou le bloc est constitué par une pièce moulée en matière synthétique.

11. Dispositif tendeur et de serrage selon l'une quelconque des revendications 1 à 10 caractérisé en ce que les pièces de serrage (10 ou 16) sont mises en forme à partir de fil métallique, notamment de fil d'acier, tandis que les organes tendeurs (14 ou 18) sont en une matière métallique et/ou synthétique.

## Claims

1. A clamping-and-tensioning device (1) for ropes (15), straps, belts or the like, having an elongated main body (2) of at least approximately rigid material and at least two clamping-pieces (10) which are guided (5, 7) to be able to shift transversely to it at a distance apart and which are movable by tensioning members (14, 18) and each of which includes one receiver for pulling through the rope (15), strap, belt or the like so that the rope (15), strap, belt or the like led through the receiver (11) may be pressed by means of the tensioning members (14, 18) against a fixed abutment (9) on the main body, characterized in that the rope (15), strap, belt or the like runs along an outer longitudinal sideface (4) of the main body (2) and that the clamping-pieces are formed by hook- or eye-bolts (10) the hook or eye (11) of which is in each case guided to be able to sink into a cross-slot (5) in the main body (2) whilst through a hole (7) in the main body (2) its threaded shank (12) projects out of the longitudinal sideface (8) of the latter lying opposite the cross-slot (5) and engages with a nut, preferably a wingnut (14) bearing there as the tensioning member.

2. A clamping-and-tensioning device as in Claim 1, characterized in that the main body (2) is a solid block provided at least at its ends with areas (3) rounded off and into it the guides (5, 7) and the abutments (9) for the clamping-pieces (10) as well as the bearing areags or seats (8) for the tensioning members (14) engaging with the clamping-pieces (10) are moulded.

3. A clamping-and-tensioning device as in one of the Claims 1 and 2, characterized in that the block forming the main body (2) exhibits the same cross-section along its whole length (Figures 1 to 4).

4. A clamping-and-tensioning device as in one of the Claims 1 to 3, characterized in that the block (2) forming the main body (2) exhibits thickened endpieces (2b, 2c) connected together in one piece by a middle piece (2a) constricted like a waist (Figure 5).

5. A clamping-and-tensioning device as in one of the Claims 1 to 4, characterized in that with each cross-slot (5) in the main body (2) lateral inlet troughs (9) for the rope, strap, or belt (15) are associated, which have at the edge of the slot their greatest depth of profile and gradually run out into the longitudinal sidefaces (4 resp. 8) of the main body (2).

6. A clamping-and-tensioning device as in one of the Claims 1 to 5, characterized in that the hooks or eyes (11) of all of the clamping-pieces (10) are associated with the same longitudinal sideface (4) of the main body (2; Figures 1 to 3 and 5).

7. A clamping-and-tensioning device as in one of the Claims 1 to 5, characterized in that the hooks or eyes (11) of the individual clamping-pieces (10) are associated with different longitudinal sidefaces (4 and 8) of the main body (2) (Figure 4).

8. A clamping-and-tensioning device as in one of the Claims 1 to 7, characterized in that the clamping-pieces consist of a stirrup (16) in which one tensioning member, e.g., a nut or a cam (18) engages with each limb (16a) of the stirrup (Figure 6).

9. A clamping-and-tensioning device as in Claim 8, characterized in that a cam (18) serving as tensioning member is supported to be able to turn about a pin (17) which has its bearings in the ends of the two limbs (16a) of the stirrup (Figure 6).

10. A clamping-and-tensioning device as in one of the Claims 1 to 9, characterized in that the main body (2) or block is designed as a part moulded from plastics.

11. A clamping-and-tensioning device as in one of the Claims 1 to 10, characterized in that the clamping-pieces (**10** resp. 16) are made as parts shaped from metal wire, in particular steel wire, whilst the tensioning members (14 resp. 18) are manufactured from metal and/or plastics.

Fig. 1

Fig. 2

Fig. 3

## Fig. 4

## Fig. 5

## Fig. 6